# FASCICULE DE BREVET EUROPEEN

(11) **EP 2 430 081 B1**
(45) Date de publication et mention de la délivrance du brevet: **20.06.2018**
(21) Numéro de dépôt: 10727774.1
(22) Date de dépôt: 07.05.2010
(51) Int. Cl.: B29B 15/10, B29C 70/48, B29B 15/12, D06M 15/55, B29K 105/00, B29B 13/02, B29C 70/30, B29C 70/02, C08J 5/10, C08J 5/24

(54) **SUBSTRAT FIBREUX, PROCEDE DE FABRICATION ET UTILISATIONS D'UN TEL SUBSTRAT FIBREUX**
FASERSUBSTRAT, VERFAHREN ZUR HERSTELLUNG UND SEINE VERWENDUNG
FIBROUS SUBSTRATE, PROCESS OF MANUFACTURE AND USE THEREOF

(30) Priorité: 12.05.2009 FR 0953135; 20.08.2009 US 235475 P; 31.12.2009 FR 0959684
(43) Date de publication de la demande: 21.03.2012
(73) Titulaire: Arkema France, 92705 Colombes (FR)
(72) Inventeur: GAILLARD, Patrice, 64370 Hagetaubin (FR); KORZHENKO, Alexander, 64000 Pau (FR)
(74) Mandataire: Killis, Andréas
(86) Numéro de dépôt international: PCT/FR2010/050892
(87) Numéro de publication internationale: WO 2010/130930

(56) Documents cités:
- WO-A-2007/044889
- WO-A-2009/007617
- WO-A1-2010/007163
- WO-A2-2005/028174
- WO-A2-2009/138782
- US-A1- 2004 222 081

## Description

L'invention concerne un procédé de fabrication d'un substrat fibreux.

On entend par substrat fibreux, les tissus, les feutres, les non tissés pouvant se présenter sous forme de bandes, de nappes, de tresses, de mèches ou morceaux.

Un substrat fibreux comporte un assemblage d'une ou plusieurs fibres. Lorsque les fibres sont continues, leur assemblage constitue des tissus. Lorsque les fibres sont courtes, leur assemblage constitue un substrat de type feutres ou non tissés.

Les fibres susceptibles de constituer un substrat fibreux peuvent être des fibres de carbone, des fibres de verre, des fibres à base de polymères, des fibres végétales seules ou en mélange.

Parmi les fibres à base de polymère, on peut citer les fibres de polymère organique telles que les fibres de polymère thermoplastique ou les fibres de polymère thermodurcissable.

On s'intéresse dans la présente invention à des matériaux composites légers permettant la fabrication de pièces mécaniques ayant une structure susceptible d'être à 3 dimensions et possédant des propriétés de bonne résistance mécanique, thermique et capables d'évacuer des charges électrostatiques, c'est-à-dire des propriétés compatibles avec la fabrication de pièces dans le domaine de la mécanique, de l'aéronautique et nautique.

Il est connu d'utiliser des tissus réfractaires pré-imprégnés d'une résine pour réaliser une matrice thermiquement isolante afin d'assurer la protection thermique de dispositifs mécaniques soumis à de fortes températures comme cela peut être le cas dans le domaine de l'aéronautique ou de l'automobile. On pourra se reporter au brevet européen n°0 398 787 qui décrit une couche de protection thermique comprenant un tissu réfractaire, destinée à protéger la virole d'une chambre de moteur statoréacteur. Outre la complexité de réalisation de cette couche de protection thermique, le tissu réfractaire noyé dans cette couche ne remplit que la fonction de bouclier thermique.

On a également recours depuis quelques années à des fibres composites pour fabriquer, notamment, diverses pièces aéronautiques ou automobiles. Ces fibres composites qui se caractérisent par de bonnes résistances thermomécaniques et chimiques, sont constituées d'un renfort filamentaire formant armature, destinée à répartir les efforts de résistance à la traction, à la flexion ou à la compression, à conférer dans certains cas une protection chimique au matériau et à lui donner sa forme.

On pourra par exemple se reporter à la demande de brevet FR 07 04620 publiée sous le n° 2 918 081 le 02 janvier 2009 qui décrit un procédé d'imprégnation de fibres continues par une matrice polymérique composite renfermant un polymère thermoplastique.

Les procédés de fabrication de pièces composites à partir de ces fibres enrobées comprennent diverses techniques telles que, par exemple, le moulage au contact, le moulage par projection, le drapage autoclavé ou le moulage basse pression.

Une technique pour réaliser des pièces creuses est celle dite de l'enroulement filamentaire, qui consiste à imprégner des fibres sèches d'une résine puis à les enrouler sur un mandrin formé d'armatures et de forme adaptée à la pièce à fabriquer. La pièce obtenue par enroulement est ensuite durcie par chauffage. Une autre technique, destinée à réaliser des plaques ou des coques, consiste à imprégner des tissus de fibres puis à les presser dans un moule afin de consolider le composite stratifié obtenu.

Des recherches ont été menées afin d'optimiser la composition de la résine d'imprégnation de façon à ce qu'elle soit suffisamment liquide pour imprégner les fibres, sans toutefois engendrer de coulures lorsque les fibres sont retirées du bain.

Il a ainsi été proposé une composition d'imprégnation renfermant une résine thermodurcissable (telle qu'une résine époxyde, par exemple le diglycidyl éther de bisphénol A, associée à un agent durcisseur) combinée à un agent régulateur de rhéologie particulier, miscible avec ladite résine, de telle manière que la composition ait un comportement newtonien à haute température (40 à 150°C). L'agent régulateur de rhéologie est de préférence un polymère à blocs comprenant au moins un bloc compatible avec la résine, tel qu'un homopolymère de méthacrylate de méthyle ou un copolymère de méthacrylate de méthyle avec notamment du diméthylacrylamide, un bloc incompatible avec la résine, constitué par exemple de monomères 1,4-butadiène ou acrylate de n-butyle, et éventuellement un bloc polystyrène. En variante, l'agent régulateur de rhéologie peut comprendre deux blocs incompatibles entre eux et avec la résine, tels qu'un bloc polystyrène et un bloc polybutadiène-1,4.

Si cette solution permet effectivement de remédier aux inconvénients de l'art antérieur en raison du caractère newtonien de la composition et de sa viscosité adaptée à l'enduction à haute température, ainsi que de son caractère pseudoplastique à basse température, elle est limitée à l'obtention de composites à base de résine thermodurcissable.

Une autre solution mettant en oeuvre une composition d'enrobage thermoplastique consiste à enrober les fibres d'une polyétheréther cétone (PEEK), de poly(sulfure de phénylène) (PPS) ou de polyphénylsulfone (PPSU), par exemple.

La technique décrite dans cette demande de brevet permet d'obtenir des fibres continues imprégnée par une matrice polymérique composite c'est à dire des fibres enrobées d'un polymère thermoplastique contenant des NTC. Ces fibres imprégnées peuvent être utilisées directement ou sous forme de tissu constitué d'un réseau bidirectionnel de fibres imprégnées. Les fibres peuvent être utilisées pour la fabrication de tissus entrant dans la composition de plaques composites.

Aucune solution ne propose à ce jour de matériau autre que des matériaux fabriqués à partir de fibres pré imprégnées éventuellement tissées après imprégnation comme alternative au métal pour la réalisation de pièces de structure d'engins en particulier mobiles en vue de les alléger tout en leur conférant une résistance mécanique comparable à celles réalisées avec des pièces de structure en métal et/ou d'assurer une protection thermique et/ou d'assurer l'évacuation de charges électrostatiques.

Or, un besoin se fait sentir d'avoir un matériau léger assurant une résistance mécanique comparable au métal, procurant une augmentation de la résistance électrique et/ou thermique de la pièce mécanique réalisée afin d'assurer l'évacuation de la chaleur et/ou de la charge électrostatique pour la réalisation simple de toute structure mécanique en 3D notamment pour l'automobile, l'aéronautique, le domaine nautique.

On pourra se reporter à l'état de la technique constitué par le document FR 2 562 467. Ce document décrit la fabrication d'un matériau composite par recouvrement d'une mèche de fibres, en particulier de verre, imprégnées à coeur d'une poudre fine de polyamide 6 par une gaine souple de polyamide 12 ; ce recouvrement est fait par extrusion puis par séchage à l'air ambiant. Cependant, dans, ce document, on ne prévoit pas l'ajout de poudre conductrice telle qu'une poudre de nanotubes de carbone en vue d'améliorer les propriétés mécaniques et/ou thermiques et/ou électriques d'une pièce mécanique à base de ce matériau composite.

On pourra également se reporter à l'état de la technique constitué par le document WO2007/044889. Ce document décrit un matériau composite à friction comprenant un mat de fibres non tissées aiguilletées, une matrice de résine, et des nanotubes de carbone introduits en très faible quantité pour améliorer les propriétés de friction du matériau. Ce matériau est prévu pour les applications dans lesquelles les pièces sont des pièces à frictions, comme par exemple des plaques de freins, des plaques d'embrayage. Les NTC représentent à peu prés entre 0,004 et 0,08 part du volume du matériau composite à friction ainsi réalisé. Aucune information sur le taux en poids de NTC relativement au poids du polymère n'est décrite ni suggérée. Il s'agit d'un mat de fibres non tissées aiguilletées c'est-à-dire d'un non tissé obtenu par une technique spécifique adaptée à la réalisation de pièces à friction, imprégné par une résine et dans lequel on introduit des NTC sans information sur le taux par rapport au polymère.

On pourra aussi se reporter également à l'état de la technique constitué par le document WO2009/007617 considéré comme l'état de la technique le plus proche. Ce document décrit un procédé d'imprégnation de fibres continues par une matrice polymérique composite renfermant un polymère thermoplastique et des nanotubes de carbone. Le procédé concerne l'imprégnation de fibres continues. Les fibres se présentent sous forme de fils unidirectionnels ou après une étape de tissage, sous forme de tissu constitué d'un réseau bidirectionnel de fibres.

Ce document ne décrit pas et ne suggère pas un procédé de fabrication d'un substrat fibreux comportant un assemblage d'une ou plusieurs fibres continues comme les tissus, ou un assemblage de fibres courtes comme les feutres et les non tissés, pouvant se présenter sous forme de bandes, de nappes, de tresses, de mèches, de morceaux, pré-imprégné par un polymère organique ou un mélange de polymères organiques contenant des nanotubes de carbone (NTC), permettant d'avoir une meilleure dispersion/répartition des NTC au sein du substrat, conduisant à une meilleure homogénéité des propriétés physico-chimiques, et par conséquent à de meilleures propriétés au global sur le produit final. 1.

Il n'est pas décrit dans ce document de substrat fibreux constituant des feutres ou des non tissés, imprégnés par un polymère organique ou mélange de polymères contenant des nanotubes de carbone dans lequel les nanotubes de carbone représentant de 0,1 à 30% et de préférence de 0,3 à 15% du poids du polymère organique ou du mélange.

Le Déposant a cherché à réaliser un matériau qui puisse, de préférence, être à la fois léger et résistant mécaniquement, servir de bouclier thermique, ce qui est recherché notamment lors de l'entrée dans l'atmosphère des aéronefs, et adapté pour l'évacuation des charges électrostatiques avec un procédé de fabrication simple.

La solution proposée par la présente invention répond à tous ces critères et est facile à utiliser dans la fabrication de pièces ayant une structure à trois dimensions comme notamment les ailes d'avion, le fuselage d'un avion, la coque d'un bateau, les longerons ou spoilers d'une automobile, ou encore des disques de freins, le corps de vérin ou de volants de direction.

A cet effet, l'invention propose un procédé de fabrication d'un substrat fibreux dans lequel le substrat fibreux comporte un assemblage d'une ou plusieurs fibres continues comme les tissus, ou un assemblage de fibres courtes comme les feutres et les non tissés, pouvant se présenter sous forme de bandes, de nappes, de tresses, de mèches, de morceaux, principalement caractérisé en ce qu'il comprend :
- l'imprégnation dudit substrat fibreux par un polymère organique ou un mélange de polymères organiques contenant des nanotubes de carbone (NTC), puis :
- le chauffage dudit substrat fibreux imprégné jusqu'à une température de ramollissement du polymère, le chauffage étant réalisé par micro-ondes ou par induction.

Il a été observé de façon surprenante que le chauffage par micro-onde ou induction est particulièrement bien adapté en présence de charges conductrices dans le substrat telles que les nanotubes de carbones dans le substrat pré-imprégné car on obtient alors une meilleure dispersion/répartition des NTC au sein du substrat, conduisant à une meilleure homogénéité des propriétés physico-chimiques, et par conséquent de meilleures propriétés au global sur le produit final.

Le substrat fibreux obtenu par le procédé selon l'invention,comporte un assemblage d'une ou plusieurs fibres continues comme les tissus, ou un assemblage de fibres courtes comme les feutres, les non tissés pouvant se présenter sous forme de bandes, nappes, tresses, mèches, pré-imprégné par un polymère organique ou un mélange de polymères organiques contenant des nanotubes de carbone (NTC) obtenu par le procédé de l'invention.

Le procédé selon l'invention est particulièrement adapté à la préparation de substrats constitués de fibres courtes.

Les substrats fibreux obtenus par le procédé selon l'invention comportent un assemblage d'une ou plusieurs fibres constituant des feutres ou des non tissés pouvant se présenter sous forme de bandes, de nappes, de tresses, de mèches, de morceaux, pré-imprégné par un polymère organique ou un mélange de polymères organiques contenant des nanotubes de carbone (NTC), dans lesquels les nanotubes de carbone représentent de 0,1 à 30% et de préférence de 0,3 à 15% du poids du polymère organique ou du mélange de polymères organiques.

L'imprégnation du substrat fibreux peut être faite en plaçant ce substrat fibreux dans un bain de polymère organique fluide contenant les nanotubes de carbone. Par « fluide », on entend au sens de l'invention un milieu qui s'écoule sous son propre poids et qui n'a pas de forme propre (à l'inverse d'un solide), comme un liquide qui peut être plus ou moins visqueux ou une poudre mise en suspension dans un gaz (air par exemple) généralement connu sous le vocable « lit fuidisé ».

Par polymère organique on entend, les polymères thermoplastiques Les substrats fibreux obtenus par le procédé selon l'invention sont particulièrement bien adaptés pour la réalisation de pièces à deux ou trois dimensions, de préférence pour la réalisation de pièces à trois dimensions.

L'utilisation de substrats fibreux pour la réalisation de pièces à trois dimensions peut mettre en oeuvre, par exemple, les étapes suivantes :
- les substrats fibreux sont pré-imprégnés d'une composition contenant un polymère organique thermoplastique ou un mélange de polymères organiques thermoplastiques et des NTC;
- on dispose ces substrats fibreux pré- imprégnés de polymère et de NTC sur une préforme, en quinconce et de façon à ce qu'ils se superposent au moins en partie jusqu'à obtention de l'épaisseur voulue,
- on chauffe jusqu'à la température de ramollissement du polymère,
- on retire la préforme après refroidissement.

Les substrats fibreux peuvent être disposés par exemple au moyen d'un robot.

Le substrat fibreux obtenu par le procédé selon l'invention peut être utilisé pour la fabrication de pièces à trois dimensions, par exemple en utilisant l'une des techniques connues suivantes :
- l'injection basse pression (R.T.M) ou,
- la technique de pultrusion ou encore,
- la technique de l'enroulement filamentaire.

Les substrats fobtenus par le procédé selon l'invention peuvent être utilisés pour la fabrication de pièces mécaniques en 3D, notamment les ailes d'avion, le fuselage d'un avion, la coque d'un bateau, les longerons ou spoilers d'une automobile, ou des disques de freins, ou encore le corps de vérin ou de volants de direction.

D'autres particularités et avantages de l'invention apparaîtront clairement à la lecture de la description qui est faite ci-après et qui est donnée à titre d'exemple illustratif et non limitatif.

Les fibres constituant les substrats fibreux peuvent être des fibres de carbone, ou des fibres de verre, ou des fibres à base de polymères, ou des fibres végétales, seules ou en mélange comme par exemple :
- les fibres polymériques synthétiques, à base notamment :
   (i) de poly(alcool vinylique),
   (ii) de polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques, en particulier les polyphtalamides et l'aramide, et les copolymères blocs, notamment polyamide/polyéther,
   (iii) de polyoléfines telles que le polyéthylène haute densité, le polypropylène et les copolymères d'éthylène et/ou de propylène,
   (iv) de polyester tel que les polyhydroxyalcanoates ;
   (v) de polyaryléther cétone (PAEK) telle que la polyétheréther cétone (PEEK) et la polyéthercétone cétone (PEKK) ;
   (vi) de polymère fluoré, notamment choisi parmi :
      (a) ceux comprenant au moins 50% molaire d'au moins un monomère fluoré de formule (I) :

         CFX₁=CX₂X₃ (I)

         où X₁, X₂ et X₃ désignent indépendamment un atome d'hydrogène ou d'halogène (en particulier de fluor ou de chlore), tels que le poly(fluorure de vinylidène) (PVDF), de préférence sous forme α, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ;
      (b) ceux comprenant au moins 50% molaire d'au moins un monomère de formule (II) :

         R-O-CH=CH₂ (II)

         où R désigne un radical alkyle perhalogéné (en particulier perfluoré), tels que le perfluoropropyl vinyléther (PPVE), le perfluoroéthyl vinyléther (PEVE) et les copolymères d'éthylène avec le perfluorométhylvinyl éther (PMVE),
   (vii) de polyuréthane thermoplastique (TPU) ;
   (viii) de polytéréphtalates d'éthylène ou de butylène ;
   (iX) de polychlorure de vinyle ;
   (X) de polymères (ou résines) phénoxy ;
   (Xi) de polyesters insaturés, de résines époxy, d'esters vinyliques, de résines phénoliques, de polyuréthanes, de cyanoacrylates et de polyimides, tels que les résines bis-maléimide, les aminoplastes (résultant de la réaction d'une amine telle que la mélamine avec un aldéhyde tel que le glyoxal ou le formaldéhyde) et leurs mélanges ;
- les fibres de carbone ;
- les fibres de verre, notamment de type E, R ou S2 ;
- les fibres de bore ;
- les fibres de silice ;
- les fibres naturelles telles que le lin, le chanvre ou le sisal, la soie; et
- leurs mélanges, tels que les mélanges de fibres de verre, carbone et aramide.

Par nanotubes de carbone selon l'invention, on entend des particules creuses (à l'inverse de nanofibres qui sont des particules pleines) de forme allongée, d'un rapport longueur /diamètre supérieur à 1 et plus spécialement supérieur à 10 et dont le diamètre est inférieur au micron. Ces nanotubes comportent une ou plusieurs parois cylindriques disposées coaxialement selon l'axe de la plus grande dimension.

Les nanotubes de carbone utilisables selon l'invention peuvent être du type monoparoi, à double paroi ou à parois multiples, formée de feuillets graphitiques. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes de carbone ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g et leur densité apparente peut notamment être comprise entre 0,05 et 0,5 g/cm3 et plus préférentiellement entre 0,1 et 0,2 g/cm3. Les nanotubes multiparois peuvent par exemple comprendre de 5 à 15 parois et plus préférentiellement de 7 à 10 parois.

Ces nanotubes de carbone peuvent être bruts ou traités en surface notamment pour les rendre hydrophiles. Ainsi, Ces nanotubes peuvent être purifiés et/ou traités (par exemple oxydés) et/ou broyés et/ou fonctionnalisés, avant leur mise en oeuvre dans le procédé selon l'invention.

Un exemple de nanotubes de carbone bruts est notamment disponible dans le commerce auprès de la société ARKEMA sous la dénomination commerciale Graphistrength® C100.

Le polymère organique est choisi parmi les polymères thermoplastiques.

Le mélange c'est-à-dire la composition polymérique thermoplastique ou le polymère thermoplastique est choisi parmi :
- les polyamides tels que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10) et le polyamide 6.12 (PA-6.12), ainsi que les copolymères, notamment les copolymères blocs, renfermant des monomères amides et d'autres monomères tels que le polytétraméthylène glycol (PTMG) ;
- les polyamides aromatiques tels que les polyphtalamides ;
- les polymères fluorés choisis parmi :
   **(i)** ceux comprenant au moins 50% molaire d'au moins un monomère fluoré et de préférence constitués de monomères de formule (I) :

      CFX1=CX2X3 (I)

      où X1, X2 et X3 désignent indépendamment un atome d'hydrogène ou d'halogène (en particulier de fluor ou de chlore), tels que :
      - le poly(fluorure de vinylidène) (PVDF), de préférence sous forme α,
      - le poly(trifluoroéthylène) (PVF3),
      - le polytétrafluoroéthylène (PTFE), les copolymères de fluorure de vinylidène avec soit l'hexafluoropropylène (HFP), soit
      - le trifluoroéthylène (VF3), soit
      - le tétrafluoroéthylène (TFE), soit
      - le chlorotrifluoroéthylène (CTFE), les copolymères fluoroéthylène / propylène (FEP), les copolymères d'éthylène avec soit
      - le fluoroéthylène/propylène (FEP), soit le tétrafluoroéthylène (TFE), soit
      - le chlorotrifluoroéthylène (CTFE) ;
         **(ii)** ceux comprenant au moins 50% molaire d'au moins un monomère et de préférence constitués de monomères de formule (II) :

            R-O-CH=CH2 (II)

            où R désigne un radical alkyle perhalogéné (en particulier perfluoré), tels que
      - le perfluoropropyl vinyléther (PPVE),
      - le perfluoroéthyl vinyléther (PEVE) et les copolymères d'éthylène avec le perfluorométhylvinyl éther (PMVE),
      - les polyaryléther cétones (PAEK) telles que la polyétheréther cétone (PEEK) et la polyéthercétone cétone (PEKK) ;
      - les polyétherimide (PEI) ;
      - les polysulfures de phénylène (PPS);
      - les polyoléfines telles que le polyéthylène (PE), le polypropylène (PP) et les copolymères d'éthylène et de propylène (PE/PP), éventuellement fonctionnalisées par un groupe acide ou anhydride ;
      - les polyuréthanes thermoplastiques (TPU) ;
      - les polytéréphtalates d'éthylène ou de butylène ;
      - les polychlorures de vinyle ;
      - les poly(meth)acrylates d'alkyle en C1 à C8 comme les (méth)acrylates de méthyle, d'éthyle, ou de butyle, ou de 2-éthylehexyle ;
      - les acides poly(méth)acryliques ;
      - les polycarbonates ;
      - les polymères siliconés ;
      - les polymères (ou résines) phénoxy ; et leurs mélanges ou copolymères.

De préférence, le polymère thermoplastique est choisi parmi les polymères ou copolymères fluorés contenant au moins 50 % de VDF, les polyamides ou copolyamides, les polyaryléthers tels que les PEKK ou encore les polyvinylalcool et les PVC ou encore le PEI ou le PPS.

Les substrats fibreux pré-imprégnés obtenus par le procédé selon l'invention sont utilisés pour la fabrication de pièces mécaniques de structure à 2 ou 3D.

### Selon un premier exemple de mise en oeuvre d'une utilisation :

- les substrats fibreux sont pré-imprégnés d'une composition contenant un polymère organique thermoplastique ou un mélange de polymères organiques thermoplastiques et des NTC ;
- on dispose ces substrats fibreux pré- imprégnés de polymère et de NTC sur une préforme, en quinconce et de façon à ce qu'ils se superposent au moins en partie jusqu'à obtention de l'épaisseur voulue. Les substrats fibreux sont éventuellement préchauffés jusqu'à une température de ramollissement du polymère et sont disposés par exemple au moyen d'un robot.

Le chauffage peut être fait au moyen d'un laser qui va permettre en outre d'ajuster le positionnement des substrats fibreux par rapport à la préforme.
- puis on laisse refroidir l'ensemble jusqu'à la température ambiante.
- Un recuit peut être prévu soit par une montée en température, soit par irradiation selon la nature du polymère. La préforme est ensuite enlevée.

### Selon un autre exemple :

Le procédé met en oeuvre la technique de l'enroulement filamentaire (pull-winding en terminologie anglo-saxone). A cette fin, on imprègne en continu le substrat fibreux dans un bain, puis on enroule sur un tambour par exemple et on polymérise la pièce en la plaçant dans un autoclave.

Dans chaque cas, on peut aussi faire un dépôt du polymère organique polymère thermoplastique comportant les NTC en ligne avant imprégnation. On peut réaliser ainsi, des pièces ayant une structure à 2 et 3 dimensions comme par exemple les ailes d'avion, le fuselage d'un avion, la coque d'un bateau, les longerons ou spoilers d'une automobile, ou encore des disques de freins, des vérins, des volants de direction.

En pratique, le chauffage du substrat peut être réalisé par un chauffage réalisé par induction ou mico-ondes.

En effet, les propriétés de conductivité du substrat pré-imprégné sont intéressantes en association avec un chauffage par induction ou par micro-ondes car alors, la conductivité électrique est mise en oeuvre et contribue à l'obtention d'une cuisson à coeur et à une meilleure homogénéité du substrat fibreux. La conduction thermique des charges présentes dans le substrat fibreux pré-imprégné contribue également avec ce type de chauffage à une cuisson à coeur améliorant l'homogénéité du substrat.

Le chauffage par induction est obtenu par exemple, par exposition du substrat à un champ électromagnétique alternatif au moyen d'une unité hautes fréquences de 650 KHz à 1 MHz.

Le chauffage par micro-ondes est obtenu par exemple, par exposition du substrat à un champ électromagnétique hyperfréquence au moyen d'un générateur hyperfréquence de 2 à 3 GHz.

L'étape d'imprégnation des substrats fibreux peut être effectuée suivant différentes techniques, en fonction notamment de la forme physique du polymère ou du mélange de polymères thermoplastiques, utilisé : pulvérulente ou plus ou moins liquide.

L'imprégnation des substrats fibreux peut se faire dans un bain de polymère liquide, contenant les NTC. Lorsque les substrats fibreux sont sous forme de bande ou nappe, ils peuvent être mis en circulation dans le bain de polymère fluide par exemple liquide contenant les NTC. Ce bain liquide peut contenir le polymère ou un mélange de polymères, seul ou dispersés dans un solvant organique ou encore de l'eau, par exemple sous forme de latex.

L'imprégnation du substrat fibreux peut également être faite suivant un procédé d'imprégnation en lit fluidisé, dans lequel la composition polymérique à savoir le ou le mélange de polymères contenant les NTC, se trouve à l'état de poudre. Pour cela, on passe les substrats dans des bains d'imprégnation en lit fluidisé de particules de polymère, chargé NTC, ces imprégnations sont éventuellement séchées et peuvent être chauffées, afin d'effectuer l'imprégnation du polymère sur les fibres ou tissus, calandrées si nécessaire. Les NTC et le polymère pulvérulents peuvent être déposés sur les tissus fibreux comme décrit dans le document FR 2 562 467 ou EP 0394900.

Il est aussi possible de déposer le mélange de poudre de NTC et de polymère organiques directement sur le substrat fibreux, placé à plat sur un support vibrant, afin de permettre la répartition de la poudre sur le substrat.

En variante encore, il est possible d'extruder directement un flux de polymère organique thermoplastique chargé de NTC sur le substrat fibreux se présentant sous forme de nappe ou bande ou tresse et d'opérer un calandrage.

Selon l'invention, les nanotubes représentent avantageusement de 0,1 à 30% et de préférence de 0,3 à 15% du poids du polymère organique thermoplastique ou du mélange de polymères organiques thermoplastiques.

## Revendications

1. Procédé de fabrication d'un substrat fibreux dans lequel le substrat fibreux comporte un assemblage d'une ou plusieurs fibres continues comme les tissus, ou un assemblage de fibres courtes comme les feutres et les non tissés, pouvant se présenter sous forme de bandes, de nappes, de tresses, de mèches, de morceaux, **caractérisé en ce qu'**il comprend :
- l'imprégnation dudit substrat fibreux par un polymère organique ou un mélange de polymères organiques contenant des nanotubes de carbone (NTC), puis:
- le chauffage dudit substrat fibreux imprégné jusqu'à une température de ramollissement du polymère, le chauffage étant réalisé par micro-ondes ou par induction
ledit(s) polymère(s) organique(s) étant thermoplastique(s).

2. Procédé de fabrication d'un substrat fibreux selon la revendication 1, **caractérisé en ce que** le chauffage par induction est obtenu par exposition du substrat à un champ électromagnétique alternatif au moyen d'une unité hautes fréquences de 650 KHz à 1 MHz

3. Procédé de fabrication d'un substrat fibreux selon la revendication 1, **caractérisé en ce que** le chauffage par micro-ondes est obtenu par exposition du substrat à un champ électromagnétique hyperfréquence au moyen d'un générateur hyperfréquence de 2 à 3 GHz.

4. Procédé de fabrication d'un substrat fibreux la revendication 1, **caractérisé en ce que** l'imprégnation est réalisée en plaçant le substrat fibreux dans un bain de polymère organique fluide contenant les nanotubes de carbone NTC.

5. Procédé de fabrication d'un substrat fibreux selon la revendication 1, **caractérisé en ce que** l'imprégnation est réalisée en plaçant le substrat fibreux en lit fluidisé, dans lequel la composition polymérique à savoir le mélange de polymères contenant les NTC, se trouve à l'état de poudre.

6. Procédé de fabrication d'un substrat fibreux selon la revendication 1, **caractérisé en ce que** l'imprégnation est réalisée en déposant le mélange de poudre de NTC et de polymère organique directement sur ledit substrat fibreux, placé à plat sur un support vibrant, afin de permettre la répartition de la poudre sur le substrat.

7. Procédé de fabrication d'un substrat fibreux selon la revendication 1, **caractérisé en ce que** l'imprégnation est réalisée en extrudant directement un flux de polymère organique chargé de NTC sur le substrat fibreux se présentant sous forme de nappe ou bande ou tresse et en réalisant un calandrage.

## Patentansprüche

1. Verfahren zur Herstellung eines Fasersubstrats, wobei das Fasersubstrat eine Anordnung von einer oder mehreren kontinuierlichen Fasern wie Gewebe, oder eine Anordnung von kurzen Fasern wie Filze und Vliesstoffe umfasst, die in der Form von Bändern, Bahnen, Geflechten, Schnüren, Stücken vorliegen können, **dadurch gekennzeichnet, dass** dieses umfasst:
- Imprägnieren des Fasersubstrats mit einem organischen Polymer oder einer Mischung von organischen Polymeren, enthaltend Kohlenstoffnanoröhrchen (NTC), dann:
- Erhitzen des imprägnierten Fasersubstrats bis auf eine Erweichungstemperatur des Polymers, wobei das Erhitzen durch Mikrowellen oder durch Induktion durchgeführt wird;
wobei das (die) organische(n) Polymere thermoplastisch ist (sind).

2. Verfahren zur Herstellung eines Fasersubstrats nach Anspruch 1, **dadurch gekennzeichnet, dass** das Erhitzen durch Induktion durch Aussetzen des Substrats an ein elektromagnetisches Wechselfeld mittels einer Hochfrequenzeinheit von 650 KHz bis 1 MHz erhalten wird.

3. Verfahren zur Herstellung eines Fasersubstrats nach Anspruch 1, **dadurch gekennzeichnet, dass** das Erhitzen durch Mikrowellen durch Aussetzen des Substrats an ein elektromagnetisches Hyperfrequenzfeld mittels eines Hyperfrequenzgenerators von 2 bis 3 GHz erhalten wird.

4. Verfahren zur Herstellung eines Fasersubstrats nach Anspruch 1, **dadurch gekennzeichnet, dass** das Imprägnieren durchgeführt wird, indem das Fasersubstrat in ein Bad des fluiden organischen Polymers platziert wird, enthaltend Kohlenstoffnanoröhrchen NTC.

5. Verfahren zur Herstellung eines Fasersubstrats nach Anspruch 1, **dadurch gekennzeichnet, dass** das Imprägnieren durchgeführt wird, indem das Fasersubstrat in ein Fließbett platziert wird, worin sich die Polymerzusammensetzung, nämlich die Mischung von Polymeren, enthaltend NTC, in Pulverform befindet.

6. Verfahren zur Herstellung eines Fasersubstrats nach Anspruch 1, **dadurch gekennzeichnet, dass** das Imprägnieren durchgeführt wird, indem die Pulvermischung von NTC und organischem Polymer direkt auf das Fasersubstrat abgeschieden wird, das flach auf einen vibrierenden Träger platziert wird, um die Verteilung des Pulvers auf dem Substrat zu gestatten.

7. Verfahren zur Herstellung eines Fasersubstrats nach Anspruch 1, **dadurch gekennzeichnet, dass** das Imprägnieren durchgeführt wird, indem direkt ein Strom von mit NTC beladenem organischen Polymer auf dem Fasersubstrat extrudiert wird, das in der Form einer Bahn oder eines Bands oder eines Geflechts vorliegt, und indem ein Kalandrieren durchgeführt wird.

## Claims

1. Process for manufacturing a fibrous substrate in which the fibrous substrate comprises an assembly of one or more continuous fibres such as fabrics, or an assembly of short fibres such as felts and nonwovens that may be in the form of strips, laps, braids, locks or pieces, **characterized in that** it comprises:
- impregnation of the said fibrous substrate with an organic polymer or a mixture of organic polymers containing carbon nanotubes (CNTs), and then:
- heating the said impregnated fibrous substrate up to the softening point of the polymer, the heating being performed by microwave irradiation or by induction,
said organic polymer(s) being thermoplastic.

2. Process for manufacturing a fibrous substrate according to Claim 1, **characterized in that** the heating by induction is obtained by exposing the substrate to an alternating electromagnetic fields using a high-frequency unit from 650 kHz to 1 MHz.

3. Process for manufacturing a fibrous substrate according to Claim 1, **characterized in that** the heating by microwave irradiation is obtained by exposing the substrate to an ultra-high-frequency electromagnetic field using an ultra-high-frequency generator of 2 to 3 GHz.

4. Process for manufacturing a fibrous substrate Claim 1, **characterized in that** the impregnation is carried out by placing the fibrous substrate in a bath of fluid organic polymer containing carbon nanotubes CNTs.

5. Process for manufacturing a fibrous substrate according to Claim 1, **characterized in that** the impregnation is carried out by placing the fibrous substrate in a fluidized bed, in which the polymer composition, i.e. the polymer mixture containing the CNTs, is in powder form.

6. Process for manufacturing a fibrous substrate according to Claim 1, **characterized in that** the impregnation is performed by depositing the mixture of CNT powder and of organic polymer directly onto the said fibrous substrate, placed flat on a vibrating support, so as to enable the distribution of the powder over the substrate.

7. Process for manufacturing a fibrous substrate according to Claim 1, **characterized in that** the impregnation is performed by directly extruding a flow of CNT-charged organic polymer onto the fibrous substrate that is in the form of a lap or strip or braid, by calendaring.
